# EUROPEAN PATENT SPECIFICATION

(11) **EP 3 288 707 B1**
(45) Date of publication and mention of the grant of the patent: **10.11.2021**
(21) Application number: 16726948.9
(22) Date of filing: 22.04.2016
(51) Int. Cl.: B23K 26/364, F16K 17/16

(54) **METHOD FOR MAKING A SAFETY OR RUPTURE ELEMENT**
VERFAHREN ZUR HERSTELLUNG EINES SICHERHEITS- ODER BRUCHELEMENTS
PROCÉDÉ DE FABRICATION D'ÉLÉMENT DE SÉCURITÉ OU DE RUPTURE

(30) Priority: 28.04.2015 IT MI20150599
(43) Date of publication of application: 07.03.2018
(73) Proprietor: Donadon Safety Discs and Devices S.R.L., 20011 Corbetta (MI) (IT)
(72) Inventor: BOSISIO, Lauro, 20162 Milano (IT); DONADON, Antonio, 20019 Settimo Milanese (Milano) (IT); MODENA, Mario, 23828 Perledo (Lecco) (IT)
(74) Representative: Zermani, Umberto
(86) International application number: PCT/IB2016/052288
(87) International publication number: WO 2016/174553

(56) References cited:
- WO-A1-2014/141307
- CA-A- 1 127 499
- US-A- 4 046 280

## Description

The present invention refers to a method for making a safety or rupture element for pipelines, particularly elements provided with at least one sheet-like body having a pre-calculated rupture threshold (typically a disc).

The present invention is advantageously used in the production of safety elements applied to systems along pneumatic or hydraulic lines, to ensure the necessary safety measures of the system, which can undergo conditions differing from those for which it was designed.

More specifically, these elements are applied to emergency lines in order to completely close the conduit on which they are applied.

A high-pressure fluid acts within one of the half-spaces defined by the element, whereas a lower pressure, for example atmospheric pressure, acts on the opposite half-space.

Alternatively, the safety elements of a known type can protect systems that operate at sub-atmospheric pressure. In this case as well, the element is subjected to a difference in pressure that acts between the two opposite surfaces thereof.

When the difference between the pressure acting within the system and the external pressure exceeds a pre-calculated safety threshold value, this disc splits open and enables the pressurized fluid to move beyond the safety element 1 so as to flow out of the system. In this manner, possible undesired excess pressure cannot damage other parts of the system.

In the case of systems that operate at sub-atmospheric pressure, rupturing of the safety disc enables the fluid under sub-atmospheric pressure to flow inside the system.

The safety elements to which reference is being made usually comprise a disc-shaped, sheet-like body with a surface on which the pressurized fluid acts and this surface can be flat, concave or convex.

Alternatively, said discs are square-shaped or rectangular, depending upon the conduit on which they need to be applied.

Discs that do not have any pre-established frangible lines open in an undefined manner with possible separation of some parts. For this reason, in many cases, preferably discs with pre-established frangible lines are used; the pre-established frangible lines can be obtained by means of through or non-through incisions of various shapes. In the case of through incisions, a second continuous layer that ensures pneumatic and/or hydraulic sealing is needed and this second layer is weaker than the calibrated section. This is not necessary in the case of non-through incisions.

In any case, these discs can have a plurality of non-through incisions arranged on a surface of the disc in a suitable configuration so as to define respective frangible lines with pre-established rupture threshold.

In other words, when the threshold value of the fluid pressure is exceeded, the safety disc splits open at said pre-established frangible lines.

In the methods for making these discs, execution of said non-through incisions requires particular attention in terms of depth, length and width, but also as concerns maintaining the mechanical characteristics of the disc material near the non-through incisions. In particular, the crystalline-metallurgical structure of the material needs to remain unaltered.

The methods with the highest performances for realizing non-through incisions on rupture discs, without jeopardizing the crystalline structure thereof, comprise the use of high-frequency lasers and they have been developed by the Applicant in recent years.

Examples of these methods and the devices capable of implementing such methods are known from the international patents WO2008/155783 and WO2013/014614 also filed by Donadon SDD S.r.l..

Note that in applying the disc to the pipeline, the disc is generally placed between two flanges and tightened, with or without the presence of sealing bodies depending on the case at hand.

This locking can be carried out directly on the pipeline or on special "disc-holders" that can be subsequently coupled to the pipeline.

Note that in spite of the very high quality of the discs and seals, there are special applications for which the types of seals mentioned above are not entirely adequate and it is better to have a connection that is completely welded.

Disadvantageously, welding a rupture disc to a pipeline (or to a disc-holder) is an extremely delicate process, especially when the diameter of the disc is small and the set pressure is low.

In fact, in such cases, calibration of the disc is altered by the stresses and/or deformations caused by the welding process, which impairs the behaviour upon the rupturing of the disc, making it non-reproducible and therefore not very safe.

CA 1 127 499 A discloses, in the opinion of the examining division of the European Patent Office, a method for making a safety element, comprising the steps of: preparing a sheet-like body of pre-determined thickness, provided with a blocking peripheral annular portion and a central portion, surrounded by the peripheral annular portion; preparing a first tubular portion having its own annular abutting edge; connecting said sheet-like body to at least said first tubular portion by means of a welding step.

WO 2014/141307 A1 discloses, in the opinion of the examining division of the European Patent Office, a method for making a safety element, comprising the steps of: preparing a sheet-like body of pre-determined thickness, provided with a blocking peripheral annular portion and a central portion, surrounded by the peripheral annular portion; whereby it comprises, subsequently to said connection step, an incision step of the sheet-like body by means of a laser beam to obtain at least one frangible line adapted to allow yield of the sheet-like body to a pre-set pressure.

An aim of the present invention is therefore to make available a method for making safety/rupture discs, and a safety/rupture disc thus realized, which make it possible to overcome the above-mentioned drawbacks of the prior art.

In particular, an aim of the present invention is to make available a method for making safety/rupture discs, and a safety/rupture disc thus realized, characterised by increased reliability and high quality.

Moreover, an aim of the present invention is to make available a method for making a safety/rupture element, and a safety/rupture element thus realized, characterized by simple realization and a high level of sealing tightness.

Said aim is achieved by a method for making a safety/rupture element having the technical characteristics of appended claim 1. The dependent claims concern particular embodiments of the invention as defined in claim 1.

In particular, this aim is achieved by a method for making a safety element, comprising the steps of preparing a sheet-like body of predetermined thickness, provided with a blocking peripheral annular portion and a central portion, surrounded by the peripheral annular portion, preparing a first tubular portion having its own annular abutting edge, and connecting the sheet-like body at least to the first tubular portion by means of at least one welding step.

According to the present invention, subsequently to said connection step, the method provides for an incision step of the sheet-like body by means of a laser beam to obtain at least one frangible line adapted to allow yield of the sheet-like body to a pre-set pressure.

Therefore, it should be noted that the sheet-like body is a rupture or safety disc for pipelines or conduits, adapted to yield when a pre-determined pressure is reached in the conduit, for the purposes of safety. Advantageously, the use of laser technology makes it possible to incise the disc, that is, the sheet-like body, after welding, thereby making it possible to obtain welded elements with characteristics of high precision and tolerance as concerns the rupture pressure.

In other words, the method according to the present invention makes it possible to complete the procedure for making the safety element with the realization of incisions, without further machining or thermal treatments that would affect the crystalline structure of the material and, as a result, the precision of the element (i.e., rupture pressure).

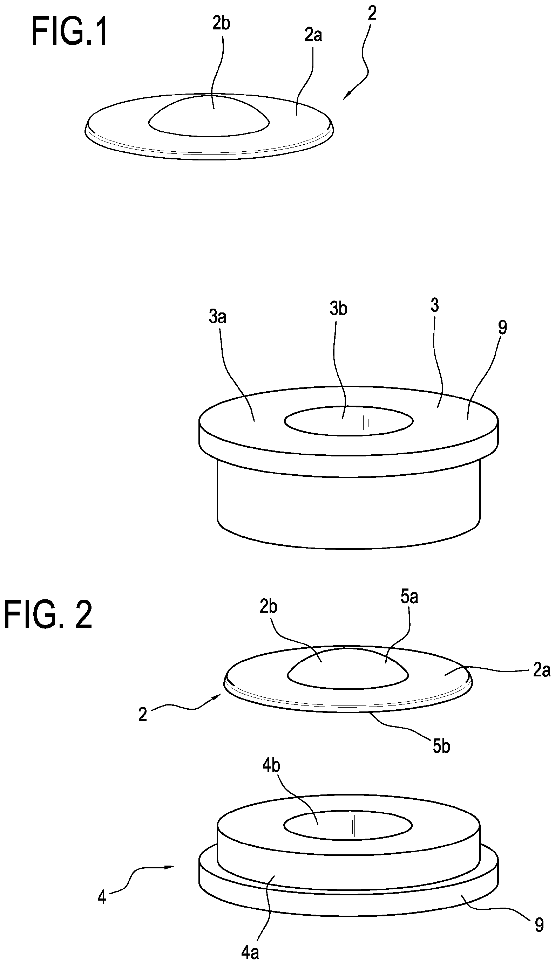

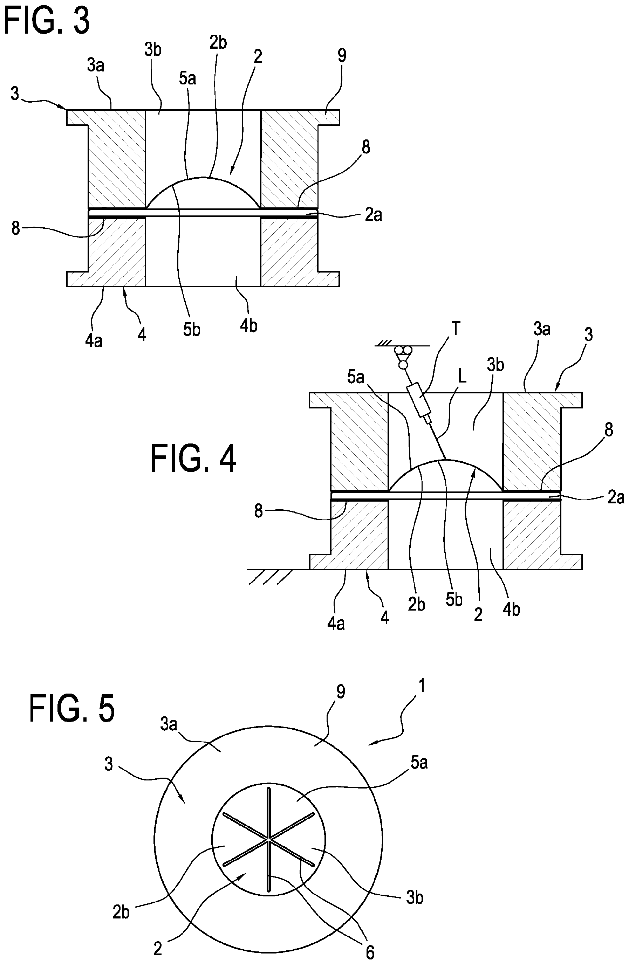

These and other characteristics an advantages will prove to be more apparent in the following illustrative and thus non-limiting description of a preferred and therefore not exclusive embodiment of a method for making a safety/rupture element, and a safety/rupture element thus realized, according to that which is illustrated in the appended drawings, of which Figures 1 to 5 show successive steps of the method.

With reference to the attached figures, number 1 indicates a safety or rupture element for pipelines or conduits according to the present invention.

As stated, the safety element 1 is mounted in pneumatic or hydraulic systems along safety conduits. In particular, the element 1 comprises at least one sheet-like body 2 adapted to completely occlude the opening of the conduit on which it is applied and adapted to rupture after a pre-determined pressure value has been reached inside the conduit.

More precisely, the element 1 comprises a first tubular portion 3 having its own annular abutting edge 3a and a second tubular portion 4, also having its own annular abutting edge 4a.

Each tubular portion is connectable (or is part of) a portion of a respective pipeline or conduit located along the system described above.

Both flanges 3, 4 have a through opening 3b, 4b surrounded by the annular edge 3a, 4a and defining a section for passage of the fluid.

Upon completion of the product, the first tubular portion 3 and the second tubular portion 4 abut against each other at their respective annular edges 3a, 4a.

The connection between the two can be made in various ways, using screws/bolts 9, clamps or other mechanical means.

The sheet-like body 2 is interposed between the two flanges 3, 4, retained in position between the two annular edges 3a, 4a.

More precisely, the sheet-like body 2, or rupture body, is provided with a blocking peripheral annular portion 2a and a central portion 2b, surrounded by the peripheral annular portion 2a.

In particular, the peripheral annular portion 2a, when in use, is interposed between the annular edges 3a, 4a of the flanges 3, 4.

In other words, the peripheral annular portion 2a is close-packed between the flanges 3, 4.

The central portion 2b instead defines the body that occludes the pipeline and has a first surface 5a and a second surface 5b that are opposite each other. The pressurized fluid acts upon one surface and the external ambient pressure acts upon the other.

In the case in which the fluid that is acting upon the first surface 5a has a pressure higher than a threshold value, the sheet-like body 2 will split open so as to enable the fluid to pass into the safety conduit and enable discharge of excess pressure into an outside environment.

The threshold value is determined as a function of the thickness of the sheet-like body, the diameter thereof (that is, the area of the central portion 2b) and the "ductility" given to it by means of one or more notches or non-through incisions 6.

Therefore, the sheet-like body 2 is preferably a disc, that is to say, an element that is very thin in thickness with respect to the other two dimensions thereof, and on which at least one notch or non-through incision 6 is present.

According to a first embodiment, the sheet-like body 2 is a planar disc that can be of various shapes depending on the shape of the conduit on which it needs to be applied. Preferably, its shape is circular.

According to another embodiment (illustrated in the figures), the sheet-like body 2, particularly the central portion 2b, is dome-shaped.

Note that the central portion 2b can be designed to burst at a specified pressure when the pressure is applied on the concave side (forward-acting or tension rupture disc) or it can be designed to burst at a specified pressure when the pressure is applied on the convex side.

This type of safety disc is known as a "reverse type", given that the rupture process begins with the overturning of the convex portion. The safety disc of the reverse type is particularly suited for use when the acting pressure varies in a cyclic manner because the cyclic stresses do not cause stress due to fatigue in the crystalline-metallurgical structure.

Moreover, as stated, the central portion 2b of the sheet -like body 2 is provided with at least one notch or non-through incision 6.

This notch or incision 6 defines a frangible or guide line that makes it possible to calibrate the rupture pressure and to guide the rupturing of the central portion 2b in a predetermined and repeatable manner (that is, safely).

In the embodiments described, the sheet-like body 2 comprises a plurality of rectilinear incisions 6 arranged in a symmetric configuration axially. However, the number, the shape and the arrangement of the scores can vary according to operating requirements.

Note that the sheet-like body 2 is made of a metal material, including for example stainless steel, nickel, aluminium or other metals or particular metal alloys.

The method according to the present invention thus provides for preparing a sheet-like body 2, preferably without machining and/or incisions 6 in the central portion 2b.

Therefore, by means of specific machinery, this sheet-like body 2 is connected at least to the first tubular portion 3.

More precisely, the sheet-like body 2, free of incisions, is positioned at the first tubular portion 3, preferably in such a manner that the respective peripheral annular portion 2a abuts (and matches) with the annular edge of the first tubular portion 3.

Therefore, the first tubular portion 3 and the sheet-like body 2 are positioned concentrically, that is, substantially coaxially.

In the connection step, the sheet-like body 2, and particularly the peripheral annular portion 2b thereof, is welded to the first tubular portion 3.

Therefore, after the welding process, the element 1 comprises at least one welding seam (or line) 8 between the annular portion 2a of the sheet-like body 2 and the annular edge 3a, 4a of the first 3 and/or second tubular portion 4.

In the preferred embodiment, the connection step provides for connecting the sheet-like body 2 to both the first 3 and the second tubular portion 4, so that the sheet-like body 2 is interposed between the first 3 and the second tubular portion 4 with its own peripheral annular portion 2b tightened between said annular edges 3, 4.

Preferably, the peripheral portion 2a of the sheet-like body 2 is welded to both flanges 3, 4 for the purpose of further increasing the sealing tightness.

The welding process can be carried out using different methods, including: electrode, TIG and laser welding.

Therefore, after the connection step, the element 1 comprises one or two welding seems (or lines) 8 between the annular portion 2a of the sheet - like body 2 and both annular edges 3a, 4a of the first 3 and the second tubular portion 4.

In some embodiments, the welding seams are so close that on the outside of the element they appear to be a single seam.

Alternatively, a single welding seam can be made, simultaneously connecting the tubular portions 3 and 4 and the sheet-like body 2. Therefore, after the connection step (i.e., the welding process), the tubular portions 3, 4 and the sheet-like body 2 define a single monolithic element. This element 1 is subdivided into two half-parts, one completely isolated hydraulically and pneumatically from the other, thus ensuring that there is no leakage between the inside of the pipeline under pressure or negative pressure and the outside, even without the aid of seals.

Note that in the embodiments in which the sheet-like body 2 has a dome-shaped central portion 2b, the method comprises a cambering step.

This cambering step can be carried out upstream or downstream of the welding step.

Preferably, the cambering step is carried out pneumatically or, alternatively, mechanically.

If it is carried out pneumatically, one side of the sheet-like body 2 is brought under pressure (and the other side is free).

If it is carried out mechanically, it is done in a suitably shaped mould.

According to the present invention, the method comprises, subsequently to the welding step, an incision step performed on the sheet-like body 2 by means of a laser beam L to obtain at least one frangible line adapted to allow yield of the sheet-like body 2 to a pre-set pressure.

More precisely, the incision step is performed on the central portion 2b of the sheet-like body 2 (that is, in the embodiment illustrated, on the dome). Therefore, the method preferably provides for positioning the sheet-like body 2, welded to the first 3 and/or to the second tubular portion 4, on a work surface.

A laser cutting head T is positioned at a central opening of the first 3 or the second tubular portion 4 so that the laser head T is oriented inside the first 3 and/or the second tubular portion 4, towards the central portion 2b of the sheet-like body 2.

A laser beam L is then generated and moved inside the first 3 and/or the second tubular portion 4 so as to generate said frangible line.

Preferably, the incision step preliminarily comprises selecting a pulsed laser beam L with a wavelength range of 300 nanometres to 1800 nanometres, in which the duration of each laser pulse is less than 10 nanoseconds, and preferably less than 1 nanosecond.

Preferably, in the preferred embodiments, the wavelength of the laser beam L is equal to approximately 343, 515, 1030 nanometres, and in any case preferably less than 1552 nanometres.

Preferably, the duration of each laser pulse ranges between 10 femtoseconds (10*10-15 seconds) and 50 picoseconds; more preferably, this duration ranges between 300 femtoseconds and 10 picoseconds. Laboratory testing using a pulse duration of 800 femtoseconds has shown good results (as shall be described below). In these tests, the wavelength of the laser beam L was equal to 1552 nanometres.

Moreover, the incision step comprises selecting a laser pulse repetition rate (that is to say, the frequency with which each pulse is repeated) ranging between 15 KHz and 1.5 MHz. Preferably, the pulse repetition rate ranges between 150 KHz and 1 MHz.

In a preferred embodiment, the laser pulse repetition rate ranges between 200 and 600 MHz.

The method further comprises the step of selecting a speed of relative motion between the laser beam L and the sheet-shaped body, that is to say, the speed at which the laser beam moves along the sheet-shaped body.

The method further comprises the step of selecting an energy value for each pulse of the laser beam L.

Preferably, the energy value of each pulse of the laser beam L ranges between 1 microjoule and 250 microjoules, more preferably less than 200 microjoules.

The power of the laser beam L is comprised between 1 and 80 W, preferably between 1 and 10 W.

The incision depth per single pass of the laser is also a function of the selection of the ranges and values cited above. According to the parameters cited hereinabove, the score depth of each single pass of the laser ranges between 0.005 µm and 5 µm.

Note that the first 3 and/or second tubular portion 4 preferably have respective free ends provided with a junction zone 9.

Preferably, the junction zone consists of a ring or flange projecting radially with respect to the annular edge 3a, 4a and configured to facilitate the connection of the safety element 1 with the pipeline or pipelines.

In some embodiments, the junction zone is defined simply by this ring and it is ready to be welded, in turn, to an annular portion of the pipeline.

In other configuration, the junction zone comprises a plurality of slots or holes apt for receiving respective tightening means such as screws or rivets.

The invention achieves the set aims and offers important advantages.

In fact, the pre-welded elements, which are only later machined by means of laser cutting, are capable of ensuring the tightness levels, under vacuum or pressure conditions, required by any application and offering high levels of precision and repeatability.

## Claims

1. A method for making a safety element, comprising the steps of:
- preparing a sheet-like body (2) of pre-determined thickness, provided with a blocking peripheral annular portion (2a) and a central portion (2b), surrounded by the peripheral annular portion (2a);
- preparing a first tubular portion (3) having its own annular abutting edge (3a);
- connecting said sheet-like body (2) to at least said first tubular portion (3) by means of at least one welding step;
**characterised in that** it comprises, subsequently to said connection step, an incision step of the sheet-like body (2) by means of a laser beam (L) to obtain at least one frangible line adapted to allow yield of the sheet-like body (2) to a pre-set pressure.

2. The method according to claim 1, **characterised in that** it comprises a preparation step of a second tubular portion (4), also having its own annular abutting edge (4a); said connection step providing for connection of the sheet-like body (2) both to said first (3) and to said second tubular portion (4) so that the sheet-like body (2) is interposed between the first (3) and the second tubular portion (4) with its own peripheral annular portion (2a) tightened between said annular edges (3a, 4a).

3. The method according to claim 2, **characterised in that** said welding step is performed so as to connect the sheet-like body (2) both to the first (3) and to the second tubular portion (4).

4. The method according to any one of the previous claims, **characterised in that** said incision step provides for the following sub-steps:
- positioning the sheet-like body (2) welded to the first (3) and/or, when referring to preceding claim 2, to the second tubular portion (4) on a work surface;
- preparing a laser head (T) at a central opening of said first (3) or said second tubular portion (4) in a manner that said laser head (T) is oriented inside the first (3) and/or the second tubular portion (4) towards the central portion (2b) of the sheet-like body (2);
- generating a laser beam (L) and moving it inside the first (3) and/or the second tubular portion (4) to generate said frangible line (6).

5. The method according to any one of the previous claims, **characterised in that** said incision step is performed on the central portion of the sheet-like body (2).

6. The method according to any one of the previous claims, **characterised in that** said laser beam (L) has a wavelength comprised in a range between 800 nanometres and 1800 nanometres, wherein the duration of each laser pulse is less than 1 nanosecond, preferably comprised between 10 femtoseconds and 900 femtoseconds.

7. The method according to any one of the previous claims, **characterised in that** said welding step is performed externally to "said first and second" tubular portions, along a circumferential direction, realising a single welding seam (8) which simultaneously connects the tubular portions (3, 4) and the sheet-like body (2).

8. The method according to any one of the previous claims, **characterised in that** said connection step provides for connecting the peripheral portion (2a) of the sheet-like body (2) with the annular edge (3a, 4a) of at least one of said first and second tubular portions (3, 4) so as the sheet-like body (2) and the tubular portion (3, 4) are substantially coaxial.

9. The method according to any one of the previous claims, **characterised in that** the central portion (2b) of the sheet-like element (2) is dome-shaped.

## Patentansprüche

1. Verfahren zur Herstellung eines Sicherheits- oder Bruchelements, umfassend die folgenden Schritte:
- Vorbereitung eines scheibenähnlichen Körpers (2) einer vorgegebenen Stärke, der mit einem blockierenden umlaufenden ringförmigen Teil (2a) und einem von dem umlaufenden ringförmigen Teil (2a) umgebenen mittleren Teil (2b) ausgestattet ist;
- Vorbereitung eines ersten rohrförmigen Teils (3), der einen eigenen ringförmigen angrenzenden Rand (3a) aufweist;
- Verbinden des genannten scheibenähnlichen Körpers (2) mit mindestens dem genannten ersten ringförmigen Teil (3) mittels mindestens eines Schweißschritts;
**dadurch gekennzeichnet, dass** es im Anschluss an den genannten Verbindungsschritt einen Schritt des Schneidens des scheibenähnlichen Körpers (2) mittels eines Laserstrahls (L) umfasst, um mindestens eine Bruchlinie zu erzielen, die geeignet ist, das Nachgeben des scheibenähnlichen Körpers (2) bei einem vorgegebenen Druck zu gestatten.

2. Verfahren nach Anspruch 1, **dadurch gekennzeichnet, dass** es einen Schritt der Vorbereitung eines zweiten rohrförmigen Teils (4) umfasst, der ebenfalls einen eigenen ringförmigen angrenzenden Rand (4a) aufweist; wobei der genannte Verbindungsschritt für die Verbindung des scheibenähnlichen Körpers (2) sowohl mit dem genannten ersten (3) als auch mit dem genannten zweiten rohrförmigen Teil (4) sorgt, so dass der scheibenähnliche Körper (2) zwischen dem ersten (3) und dem zweiten rohrförmigen Teil (4), mit seinem eigenen umlaufenden ringförmigen Teil (2a) zwischen den genannten ringförmigen Rändern (3a, 4a) eingespannt, eingefügt wird.

3. Verfahren nach Anspruch 2, **dadurch gekennzeichnet, dass** der genannte Schweißschritt ausgeführt wird, um den scheibenähnlichen Körper (2) sowohl mit dem ersten (3) als auch mit dem zweiten rohrförmigen Teil (4) zu verbinden.

4. Verfahren nach einem beliebigen der vorangegangenen Ansprüche, **dadurch gekennzeichnet, dass** der genannte Schneidschritt die folgenden Unterschritte vorsieht:
- Positionierung des scheibenähnlichen Körpers (2), der an dem ersten (3) und/oder, bei Bezugnahme auf den vorstehenden Anspruch 2, an dem zweiten rohrförmigen Teil (4) verschweißt ist, auf einer Arbeitsfläche;
- Vorbereitung eines Laserkopfes (T) an einer zentralen Öffnung des genannten ersten (3) oder des genannten zweiten rohrförmigen Teils (4) auf eine Weise, dass der genannte Laserkopf (T) im Inneren des ersten (3) und/oder des zweiten rohrförmigen Teils (4) zum mittleren Teil (2b) des genannten scheibenähnlichen Körpers (2) gerichtet ist;
- Erzeugen eines Laserstrahls (L) und Bewegen desselben im Inneren des ersten (3) und/oder zweiten rohrförmigen Teils (4), um die genannte Bruchlinie (6) zu erzeugen.

5. Verfahren nach einem beliebigen der vorangegangenen Ansprüche, **dadurch gekennzeichnet, dass** der genannte Schneidschritt auf dem mittleren Teil des scheibenähnlichen Körpers (2) ausgeführt wird.

6. Verfahren nach einem beliebigen der vorangegangenen Ansprüche, **dadurch gekennzeichnet, dass** der genannte Laserstrahl (L) eine Wellenlänge in einem Bereich zwischen 800 Nanometern und 1800 Nanometern aufweist, bei dem die Dauer jedes Laserimpulses weniger als 1 Nanosekunde beträgt, vorzugsweise zwischen 10 Femtosekunden und 900 Femtosekunden.

7. Verfahren nach einem beliebigen der vorangegangenen Ansprüche, **dadurch gekennzeichnet, dass** der genannte Schweißschritt außen an dem "genannten ersten und zweiten" rohrförmigen Teil entlang einer Umfangsrichtung ausgeführt wird und eine einzelne Schweißnaht (8) anbringt, die gleichzeitig die rohrförmigen Teile (3, 4) und den scheibenähnlichen Körper (2) verbindet.

8. Verfahren nach einem beliebigen der vorangegangenen Ansprüche, **dadurch gekennzeichnet, dass** der genannte Verbindungsschritt für die Verbindung des umlaufenden Teils (2a) des scheibenähnlichen Körpers (2) mit dem ringförmigen Rand (3a, 4a) mindestens eines der genannten ersten und zweiten rohrförmigen Teile (3, 4) sorgt, so dass der scheibenähnliche Körper (2) und der rohrförmige Teil (3, 4) im Wesentlichen koaxial sind.

9. Verfahren nach einem beliebigen der vorangegangenen Ansprüche, **dadurch gekennzeichnet, dass** der mittlere Teil (2b) des scheibenähnlichen Elements (2) kuppelförmig ist.

## Revendications

1. Procédé de fabrication d'un élément de sécurité, comprenant les étapes consistant à :
- préparer un corps laminaire (2) d'une épaisseur prédéterminée, muni d'une partie annulaire périphérique de blocage (2a) et d'une partie centrale (2b), entourée de la partie annulaire périphérique (2a) ;
- préparer une première partie tubulaire (3) ayant son propre bord en butée annulaire (3a) ;
- raccorder ledit corps laminaire (2) à ladite première partie tubulaire (3) au moyen d'au moins une étape de soudage ;
**caractérisé en ce qu'**il comprend, suite à ladite étape de raccordement, une étape d'incision du corps laminaire (2) au moyen d'un faisceau laser (L) afin d'obtenir au moins une ligne frangible apte à permettre au corps laminaire de céder (2) sous une pression préétablie.

2. Procédé selon la revendication 1, **caractérisé en ce qu'**il comprend une étape de préparation d'une deuxième partie tubulaire (4), ayant aussi son propre bord en butée annulaire (4a) ; ladite étape de raccordement fournissant le raccordement du corps laminaire (2) à ladite première (3) et à ladite deuxième partie tubulaire (4) de sorte que le corps laminaire (2) soit interposé entre la première (3) et la deuxième partie tubulaire (4) avec sa propre partie annulaire périphérique (2a) serrée entre lesdits bords annulaires (3a, 4a).

3. Procédé selon la revendication 2, **caractérisé en ce que** ladite étape de soudage est réalisée de façon à raccorder le corps laminaire (2) à la première (3) et à la deuxième partie tubulaire (4).

4. Procédé selon l'une quelconque des revendications précédentes, **caractérisé en ce que** ladite étape d'incision fournit les sous-étapes suivantes :
- positionner le corps laminaire (2) soudé à la première partie (3) e/ou, lorsqu'on se réfère à la revendication 2 précédente, à la deuxième partie tubulaire (4) sur une surface de travail ;
- préparer une tête laser (T) en correspondance d'une ouverture centrale de ladite première (3) ou de ladite deuxième partie tubulaire (4) de sorte que ladite tête laser (T) soit orientée vers la partie interne de la première (3) et/ou de la deuxième partie tubulaire (4) vers la partie centrale (2b) du corps laminaire ;
- générer un faisceau laser (L) et déplacer ce dernier vers la partie interne de la première (3) et/ou de la deuxième partie tubulaire (4) afin de générer ladite ligne frangible (6).

5. Procédé selon l'une quelconque des revendications précédentes, **caractérisé en ce que** ladite étape d'incision est réalisée sur la partie centrale du corps laminaire (2).

6. Procédé selon l'une quelconque des revendications précédentes, **caractérisé en ce que** ledit faisceau laser (L) a une longueur d'onde comprise dans une plage allant de 800 nanomètres à 1800 nanomètres, dans lequel la durée de chaque impulsion de laser est inférieure à 1 nanoseconde, préférablement comprise entre 10 femtosecondes et 900 femtosecondes.

7. Procédé selon l'une quelconque des revendications précédentes, **caractérisé en ce que** ladite étape de soudage est réalisée à l'extérieur « desdites première et deuxième » parties tubulaires, le long d'une direction circonférentielle, en réalisant une seule marque de soudure (8) qui raccorde simultanément les parties tubulaires (3, 4) et le corps laminaire (2).

8. Procédé selon l'une quelconque des revendications précédentes, **caractérisé en ce que** ladite étape de raccordement fournit le raccordement de la partie périphérique (2a) du corps laminaire (2) au bord annulaire (3a, 4a) d'au moins une desdites première et deuxième parties tubulaires (3, 4) de sorte que le corps laminaire (2) et la partie tubulaire (3, 4) soient sensiblement coaxiaux.

9. Procédé selon l'une quelconque des revendications précédentes, **caractérisé en ce que** la partie centrale (2b) de l'élément tubulaire (2) est en forme de dôme.
